# FASCICULE DE BREVET EUROPEEN

(11) **EP 1 526 431 B1**
(45) Date de publication et mention de la délivrance du brevet: **08.10.2008**
(21) Numéro de dépôt: 04104270.6
(22) Date de dépôt: 03.09.2004
(51) Int. Cl.: G06F 21/00

(54) **Contrôle d'accès à des périphériques d'un microprocesseur**
Zugangskontrolle zu Mikroprozessorperipheriegeräten
Microprocessor's peripherals access control

(30) Priorité: 04.09.2003 FR 0350501
(43) Date de publication de la demande: 27.04.2005
(73) Titulaire: STMicroelectronics SA, 92120 Montrouge (FR)
(72) Inventeur: Kasser, Bernard, 13600, Ceyreste (FR); Orlando, William, 13790, Peynier (FR); Courcambeck, Stephan, 13380, Plan de Cuques (FR)
(74) Mandataire: de Beaumont, Michel

(56) Documents cités:
- FR-A- 2 802 319
- US-A1- 2002 019 941
- US-B1- 6 212 635
- GONG L: "A secure identity-based capability system" PROCEEDINGS OF THE SYMPOSIUM ON SECURITY AND PRIVACY. OAKLAND, MAY 1 - 3, 1989, WASHINGTON, IEEE COMP. SOC. PRESS, US, 1 mai 1989 (1989-05-01), pages 56-63, XP010016007 ISBN: 0-8186-1939-2
- SMIT G J M ET AL: "The Harpoon security system for helper programs on a Pocket Companion" EUROMICRO 97. NEW FRONTIERS OF INFORMATION TECHNOLOGY., PROCEEDINGS OF THE 23RD EUROMICRO CONFERENCE BUDAPEST, HUNGARY 1-4 SEPT. 1997, LOS ALAMITOS, CA, USA,IEEE COMPUT. SOC, US, 1 septembre 1997 (1997-09-01), pages 231-238, XP010243976 ISBN: 0-8186-8129-2
- SANDHU R S ET AL: "ACCESS CONTROL: PRINCIPLES AND PRACTICE" IEEE COMMUNICATIONS MAGAZINE, IEEE SERVICE CENTER. PISCATAWAY, N.J, US, vol. 32, no. 9, 1 septembre 1994 (1994-09-01), pages 40-48, XP000476554 ISSN: 0163-6804

## Description

La présente invention concerne de façon générale le contrôle d'accès à des ressources exploitées par un microprocesseur. Plus particulièrement, l'invention concerne le contrôle d'accès à des périphériques exploités par au moins un processeur principal en fonction des applications (logicielles) exécutées par ce microprocesseur et des droits d'accès qui leur sont respectivement conférés.

Par périphérique d'un microprocesseur, on entend un dispositif physique communiquant avec ce microprocesseur par un bus et servant, le plus souvent, d'interface avec un autre dispositif (par exemple, une connexion réseau, une carte graphique, un clavier, une mémoire, etc.).

L'essor des systèmes informatiques communicants et des téléchargements de programmes par des réseaux de communication non nécessairement sécurisés a fait apparaître des problèmes dans l'exécution des programmes par des systèmes à processeur. Parmi ces problèmes, l'invention concerne plus précisément celui lié à l'accès à certains périphériques du système de façon non autorisée par des programmes. En effet, malgré tous les systèmes d'authentification, de cryptographie et analogues qui permettent aujourd'hui de contrôler l'authenticité ou la validité d'un programme chargé en mémoire d'un système à processeur, il subsiste le risque d'une tentative d'accès frauduleuse ou accidentelle par ce programme à des ressources du système dans lequel il a été installé de façon valide.

Le document de l'art antérieur US 2002/0019941 montre une méthode de restriction d'accès aux ressources d'un ordinateur à un procédé au moyen de jetons.

Un exemple d'application de la présente invention concerne les téléphones mobiles de type GSM. Dans une telle application, l'authentification de l'utilisateur est effectuée par le biais de sa carte à puce (carte SIM) qui contient des informations de type clé d'accès au réseau GSM. Avec l'évolution des téléphones vers des appareils de plus en plus ouverts en termes d'applications exécutables (ordinateurs communicants, PDA, etc.), une application est susceptible d'accéder à des ressources du téléphone qui ne lui sont pas destinées. Un tel accès peut conduire, par exemple, à un blocage accidentel ou volontaire de la carte SIM sans que cela soit souhaité par l'utilisateur ou l'opérateur, ou encore à un accès à un autre réseau parallèle (réseau local sans fil de type WLAN - Wireless Local Area Network - ou similaire) sans contrôle de l'opérateur GSM. En outre, cela fragilise les systèmes vis-à-vis de virus ou accès pirates.

Un autre exemple d'application de l'invention concerne les décodeurs de réception de signaux de télédiffusion (Set Top Box) qui autorisent le visionnage par un téléviseur de certains signaux reçus en fonction d'une clé contenue dans une carte à puce, et définissant les chaînes accessibles par l'utilisateur. La carte à puce sert ici à déchiffrer les données ou à fournir la clé d'accès aux données constituées par les programmes diffusés. Le décodeur permet aussi de télécharger des applications, ces applications pouvant alors provenir de sources non contrôlées par l'opérateur (par exemple, Internet). Par contre, toutes les ressources internes du décodeur sont alors potentiellement accessibles à ces applications, ce qui constitue une faiblesse en terme de sécurité du système.

La présente invention vise à proposer une nouvelle architecture de contrôle d'accès à des périphériques exploités par un processeur principal à partir d'un processeur secondaire de type carte à puce.

L'invention vise également à proposer une nouvelle architecture de gestion des accès à au moins deux réseaux de communication différents par un même appareil.

Pour atteindre ces objets ainsi que d'autres, la présente invention prévoit un procédé de contrôle d'accès entre un processeur principal et des périphériques reliés par un bus de communication, comme décrit dans les revendications indépendantes, les modes alternatifs de mise en oeuvre étant décrits dans les revendications dépendantes.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 illustre, de façon très schématique et sous forme de blocs, un mode de mise en oeuvre du procédé de contrôle d'accès selon l'invention ;
la figure 2 illustre un exemple de structure d'une table de contrôle d'accès selon la présente invention ; et
la figure 3 représente, de façon très schématique et sous forme de blocs, un exemple d'architecture de système à processeur auquel s'applique la présente invention.

Les mêmes éléments ont été désignés par les mêmes références aux différentes figures. Pour des raisons de clarté, seuls les étapes et éléments qui sont nécessaires à la compréhension de l'invention ont été représentés aux figures et seront décrits par la suite. En particulier, les ressources ou périphériques exploités par le processeur principal sous contrôle de l'invention n'ont pas été détaillés, celle-ci s'appliquant à tout système connu.

Une caractéristique de la présente invention est d'utiliser une carte à puce, ou plus généralement un processeur auxiliaire pourvu de sa propre mémoire, pour gérer les accès des programmes exécutés par un processeur principal d'un système distinct de la carte, aux différents périphériques de ce processeur principal.

Une différence importante entre l'invention et les systèmes existants est que, dans les systèmes existants, la politique de sécurité consiste généralement à charger le processeur principal et son système d'exploitation, de vérifier l'autorisation d'exécution d'une application donnée par le processeur. De plus, dans le cas où cette vérification s'effectue sur la base d'une clé contenue dans une carte à puce distante, elle se limite à un contrôle d'intégrité et d'authenticité, puis à l'autorisation d'installation et d'exécution, le contrôle d'accès aux périphériques étant géré par le processeur principal.

A l'inverse, selon l'invention, la décision d'autoriser ou non l'accès à certains périphériques pour une application donnée est, au moins partiellement, prise par le processeur auxiliaire (de la carte à puce). Le processeur principal n'a pas pour rôle de modifier ce contrôle d'accès défini par la carte à puce, mais de l'appliquer. C'est ce qui permet notamment de protéger la carte à puce contre des attaques visant à verrouiller le système, et de contrôler les accès à différentes ressources.

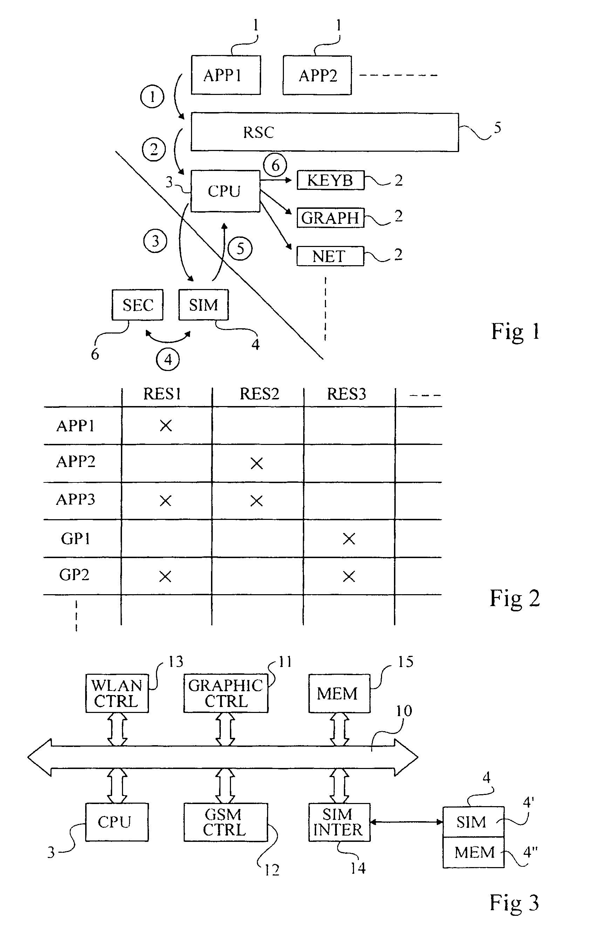

La figure 1 illustre, de façon très schématique et sous forme de blocs, un mode de mise en oeuvre de la présente invention. La représentation de cette figure est fonctionnelle et très simplifiée.

Plusieurs programmes applicatifs 1 (APP1, APP2) sont susceptibles de demander des accès à des périphériques 2 d'un microprocesseur principal 3 (CPU). Les périphériques sont, par exemple, un clavier KEYB, une interface graphique GRAPH, l'accès au réseau Internet NET, etc. Le microprocesseur 3 est capable de communiquer avec une carte à puce et plus précisément avec le processeur 4 (SIM) de celle-ci.

Lorsqu'une des applications 1 a besoin d'accéder à un des périphériques 2, sa demande est interceptée par un contrôleur ou gestionnaire d'accès aux ressources (bloc 5, RSC). Ce gestionnaire est, par exemple, contenu dans le noyau du système d'exploitation d'une architecture classique. Une telle interception revient à couper en plusieurs étapes un accès habituellement direct entre l'application et la ressource. Une première étape ① concerne la demande d'accès à un périphérique vers le contrôleur d'accès 5, le contrôleur d'accès relayant cette demande vers la carte à puce 4 par l'intermédiaire du CPU (étapes ② et ③.

Selon l'invention, la carte 4 décide d'autoriser l'accès en fonction (étape ④) de critères ou d'une politique de sécurité qu'elle contient (bloc 6, SEC). Cette politique de sécurité est, par exemple, matérialisée par une table à double entrée comme cela sera décrit par la suite en relation avec la figure 2, ou par n'importe quelle règle habituelle ou critères d'acceptation de fournir ou non l'accès à la ressource demandée. La carte 4 répond (étape ⑤) au microprocesseur 3. Si l'accès est autorisé, le microprocesseur 3 autorise alors l'application à accéder à la ressource correspondante (étape ⑥).

Bien entendu, les différents échanges entre le processeur et la carte à puce peuvent faire appel à des processus de chiffrement ou de cryptographie habituels, indépendamment du fonctionnement de l'invention.

L'acceptation de l'accès par la carte à puce peut s'assimiler à la fourniture d'un jeton d'autorisation d'accès à destination du processeur principal 3 selon une demande faite par celui-ci pour une demande d'accès à un périphérique donné par une application donnée. A la différence des systèmes d'authentification classiques, ce jeton n'est toutefois pas une clé validant le programme en lui-même, ni l'authentifiant. Les systèmes d'authentification par clés classiques peuvent d'ailleurs être combinés avec l'invention, de même que les systèmes de chiffrement des communications (par exemple, à clés publiques et privées) entre la carte et le système principal et/ou entre ce système et ses périphériques.

Selon un premier mode de mise en oeuvre, le processus exposé en figure 1 s'effectue à chaque demande d'accès par une application quelconque à un périphérique, c'est-à-dire que la carte à puce est sollicitée en permanence pour donner en temps réel l'autorisation d'accès.

Selon un autre mode de mise en oeuvre, ces autorisations d'accès sont données ou générées par la carte à puce lors d'une première utilisation ou lors de l'installation de l'application dans le système comprenant le processeur principal. Par exemple, ces autorisations sont ensuite interprétées de façon logicielle ou comme une configuration d'une unité (non représentée) de gestion d'accès à la mémoire du processeur 3 (par exemple, une unité connue sous l'appellation "Memory Management Unit"). Dans ce dernier cas, c'est la carte à puce qui seule a la possibilité d'écrire ou de modifier la configuration de l'unité de gestion de mémoire, de sorte que le processeur principal ne peut prendre aucune décision quant au contrôle d'accès, mais se contente d'appliquer les règles inscrites par la carte à puce dans l'unité de gestion de mémoire.

La figure 2 illustre, par un tableau, un exemple de mise en oeuvre du contrôle d'accès selon l'invention autorisant l'accès à certains périphériques ou ressources (RES1, RES2, RES3) pour une ou plusieurs applications (APP1, APP2, APP3) ou groupe d'applications (GP1, GP2). En effet, la mise en oeuvre de l'invention est compatible avec le regroupement des applications par familles pour autoriser certains types de périphériques ou ressources à certaines familles d'application. Ces règles d'attribution sont bien entendu combinables avec des autorisations d'accès individuelles à des périphériques donnés.

La figure 3 représente, de façon très schématique et sous forme de blocs, un exemple d'architecture auquel s'applique la présente invention. On suppose ici de façon simplifiée l'exemple d'un téléphone mobile dont un processeur principal 3 (CPU) communique par l'intermédiaire d'un bus 10 avec différents périphériques parmi lesquels un périphérique graphique 11 (GRAPHIC CTRL), un périphérique d'accès au réseau téléphonique de type GSM 12 (GSM CTRL), un périphérique d'accès à un réseau local 13 (WLAN CTRL), une interface avec la carte à puce 14 (SIM INTER) et une ou plusieurs mémoires 15 (MEM). Bien entendu, le nombre de périphériques communiquant avec l'unité centrale 3 par l'intermédiaire du bus 10 n'est pas limité et d'autres périphériques (par exemple un clavier, une interface d'alimentation, le processeur auxiliaire ou d'autres processeurs, etc.) accèdent au bus 10 et peuvent être contrôlés par l'invention.

La carte à puce 4 est symbolisée par un processus auxiliaire 4' (SIM) et une mémoire 4" (MEM) contenant les règles de sécurité affectées au système.

La mise en oeuvre du procédé de contrôle d'accès de l'invention à une architecture telle qu'illustrée par la figure 3 permet de différencier, selon le contenu de règles de sécurité mémorisées dans la carte 4, les accès à un réseau de type GSM d'un des accès à un réseau de type local.

Un avantage de la présente invention est que la politique ou les critères de contrôle d'accès aux périphériques du système sont fixés par la carte à puce distante et gérés par celle-ci. Ainsi, un même appareil peut être intégralement contrôlé par la carte à puce sans permettre à une application pirate d'accéder, même après authentification éventuelle par la carte, à des périphériques non autorisés, comme c'est le cas dans les architectures classiques.

Un autre avantage de la présente invention est que, dans le cas où le processeur auxiliaire met à jour la configuration de l'unité de gestion d'accès à la mémoire du processeur principal, elle garantit une absence de piratage, même par l'intermédiaire de téléchargement d'applications pirates par le biais d'une connexion d'un réseau externe, par exemple de type Internet, au processeur principal.

Un autre avantage de l'invention est que sa mise en oeuvre appliquée à un système de téléphone portable autorise une différenciation et une gestion des droits d'accès à différents réseaux par la carte à puce seulement, donc par l'opérateur réseau.

Bien entendu, la présente invention est susceptible de diverses variantes et modifications qui apparaîtront à l'homme de l'art. En particulier, la mise en oeuvre pratique de l'invention à partir des indications fonctionnelles données ci-dessus et en utilisant des outils connus est à la portée de l'homme du métier.

De plus, bien que l'invention ait été décrite en relation avec un contrôle d'accès à plusieurs périphériques, un même périphérique peut remplir plusieurs fonctions et être alors considéré comme plusieurs ressources différentes au sens de l'invention. Par exemple, le système de contrôle d'accès peut être utilisé pour contrôler l'accès à des registres particuliers équipant un même périphérique d'un microprocesseur, qui sont particulièrement sensibles en terme de sécurité (par exemple, des registres de masque pour contrôleurs d'interruption, des registres de données, etc.).

En outre, bien que l'invention ait été décrite en relation avec un processeur auxiliaire contenu dans une carte à puce qui constitue un mode de réalisation préféré, il n'est pas exclu que ce processeur auxiliaire soit contenu dans un autre élément qu'une carte à puce.

Enfin, le contrôle d'accès géré par le processeur auxiliaire peut être combiné avec une gestion classique par le processeur principal, la décision finale d'autoriser ou non l'accès provenant du résultat de cette combinaison.

## Revendications

1. Procédé de contrôle d'accès entre un processeur principal (3) et des périphériques (2 ; 11, 12, 13, 14, 15) reliés par un bus (10) de communication, dans lequel au moins un jeton d'autorisation d'accès à un ou plusieurs desdits périphériques est affecté à tout ou partie des programmes devant être exécutés par le processeur principal, la présence dudit jeton étant vérifiée à chaque demande d'accès d'un desdits programmes à un desdits périphériques pour l'accès au périphérique concerné, **caractérisé en ce que :**
ledit jeton est fourni, lors de l'installation ou d'une nouvelle utilisation d'un programme afin de définir les périphériques auxquels il aura ultérieurement accès, par un processeur auxiliaire (4) exploitant une mémoire distincte de celle du processeur principal, le processeur auxiliaire (4) configurant une unité de gestion d'accès à la mémoire du processeur principal par fourniture dudit jeton.

2. Procédé selon la revendication 1, dans lequel au moins deux desdits périphériques sont constitués par une carte d'accès à un réseau de téléphonie mobile (12) et par une carte d'accès à un réseau sans fil local (13), ledit processeur auxiliaire (4) autorisant ou non l'accès à l'un des réseaux à chaque demande de communication établie par le processeur principal (3).

3. Procédé selon la revendication 1, dans lequel ledit processeur auxiliaire (4) est contenu dans une carte à puce.

4. Procédé selon la revendication 1, dans lequel ledit processeur auxiliaire (4) constitue un desdits périphériques.

5. Ensemble électronique comprenant au moins un processeur principal (3) et des périphériques (2 ; 11, 12, 13, 14, 15) dont on souhaite contrôler les accès, **caractérisé en ce qu'**il comporte des moyens pour la mise en oeuvre du procédé selon l'une quelconque des revendications 1 à 4.

6. Ensemble électronique selon la revendication 5, comportant un processeur auxiliaire (4).

7. Système de contrôle d'accès à des périphériques (2 ; 11, 12, 13, 14, 15) communiquant avec un processeur principal (3) par l'intermédiaire d'un bus (10), **caractérisé en ce qu'**il comporte un moyen (5) d'exploitation d'informations fournies par un processeur auxiliaire (4) autorisant ou non l'accès à un périphérique donné par un programme exécuté par le processeur principal , pour la mise en oeuvre du procédé selon l'une quelconque des revendications 1-4.

8. Système selon la revendication 7, dans lequel un périphérique est au moins constitué d'une interface d'accès à un réseau de communication de type réseau local ou téléphonie mobile.

## Claims

1. A method of access control between a main processor (3) and peripherals (2; 11, 12, 13, 14, 15) connected by a communication bus (10), wherein at least one token authorizing access to one or several of said peripherals, is assigned to all or part of the programs to be executed by the main processor, the presence of said token being checked for each request of access of one of said programs to one of said peripherals for the access to the concerned peripheral, **characterized in that:**
said token is provided, upon installation or new use of a program, to define the peripherals to which it will further have access, by an auxiliary processor (4) exploiting a memory distinct from that of the main processor, said auxiliary processor (4) configuring a unit for managing the access to the main processor memory by provision of said token.

2. The method of claim 1, wherein at least two of said peripherals are formed of a card of access to a mobile telephony network (12) and of a card of access to a wireless local area network (13), said auxiliary processor (4) authorizing or not access to one of the networks on each call request completed by the main processor (3).

3. The method of claim 1, wherein said auxiliary processor (4) is contained in an integrated circuit card.

4. The method of claim 1, wherein said auxiliary processor (4) forms one of said peripherals.

5. An electronic assembly comprising at least one main processor (3) and peripherals (2; 11, 12, 13, 14, 15), the accesses of which are desired to be controlled, comprising means for implementing the method of any of claims 1 to 4.

6. The electronic assembly of claim 5, comprising an auxiliary processor (4).

7. A system for controlling the access to peripherals (2; 11, 12, 13, 14, 15) communicating with a main processor (3) via a bus (10), **characterized in that** it comprises means (5) for exploiting information provided by an auxiliary processor (4) authorizing or not the access to a given peripheral by a program executed by the main processor, for implementing the method of any of claims 1 to 4.

8. The system of claim 7, wherein a peripheral is at least formed of an interface of access to a communication network of local area network or mobile telephony type.

## Patentansprüche

1. Verfahren zum Steuern des Zugriffs zwischen einem Hauptprozessor (3) und Peripheriegeräten (2; 11, 12, 13, 14, 15), die über einen Kommunikationsbus (10) verbunden sind, wobei wenigstens ein Token oder Kennzeichen, das Zugriff auf eines oder mehrere der Peripheriegeräte autorisiert allen oder einem Teil der Programme, die durch den Hauptprozessor durchgeführt werden zugewiesen ist, wobei das Vorhandensein des Tokens überprüft wird für jede Zugriffsanfrage von einem der Programme zu einem der Peripheriegeräte für den Zugriff auf das bestimmte Peripheriegerät, **dadurch gekennzeichnet, dass** das Token vorgesehen wird, beim Installieren oder einer neuen Verwendung eines Programms zum Definieren der Peripheriegeräte, auf die es in der Zukunft Zugriff hat, und zwar über einen Hilfsprozessor (4), der einen Speicher verwendet, der sich von dem des Hauptprozessors unterscheidet, wobei der Hilfsprozessor (4) eine Einheit konfiguriert zum Verwalten des Zugriffs auf den Hauptprozessorspeicher durch Vorsehen des Tokens.

2. Verfahren nach Anspruch 1, wobei wenigstens zwei der Peripheriegeräte gebildet werden aus einer Zugriffskarte für ein Mobiltelefonnetzwerk (12) und einer Zugriffskarte auf ein drahtloses LAN (local area network) (13), wobei der Hilfsprozessor (4) Zugriff auf eines der Netzwerke bei jeder Anrufanfrage, die durch den Hauptprozessor (3) komplettiert wird, autorisiert.

3. Verfahren nach Anspruch 1, wobei der Hilfsprozessor (4) in einer integrierten Schaltungskarte enthalten ist.

4. Verfahren nach Anspruch 1, wobei der Hilfsprozessor (4) eines der Peripheriegeräte bildet.

5. Elektronische Anordnung, die wenigstens einen Hauptprozessor (3) und Peripheriegeräte (2; 11, 12, 13, 14, 15) aufweist, wobei der Zugriff auf diese gesteuert werden soll, wobei die Anordnung Mittel aufweist zum Implementieren des Verfahren nach einem der Ansprüche 1 bis 4.

6. Elektronische Anordnung nach Anspruch 5, die einen Hilfsprozessor (4) aufweist.

7. System zum Steuern des Zugriffs auf Peripheriegeräte (2; 11, 12, 13, 14, 15), die mit einem Hauptprozessor (3) über einen Bus (10) kommunizieren, **dadurch gekennzeichnet, dass** das System Mittel (5) aufweist zum Ausnutzen von Information, die durch einen Hilfsprozessor (4) vorgesehen wird, der einen Zugriff auf ein gegebenes Peripheriegerät durch ein Programm, das durch den Hauptprozessor durchgeführt wird, autorisiert oder nicht, zum Implementieren des Verfahrens nach einem der Ansprüche 1 bis 4.

8. System nach Anspruch 7, wobei ein Peripheriegerät wenigstens aus einer Zugriffsschnittstelle zu einem Kommunikationsnetzwerk des LAN (local area network) oder Mobiltelefontyps gebildet ist.
